(19) Europäisches Patentamt
European Patent Office
Office européen des brevets

(11) Veröffentlichungsnummer : **0 114 340**
**B1**

# (12) EUROPÄISCHE PATENTSCHRIFT

(45) Veröffentlichungstag der Patentschrift : **02.03.88**

(51) Int. Cl.⁴ : **G 11 B 5/70**

(21) Anmeldenummer : **83112807.9**

(22) Anmeldetag : **20.12.83**

## (54) Verfahren zur Herstellung von magnetischen Aufzeichnungsmaterialien.

(30) Priorität : **28.12.82 DE 3248327**

(43) Veröffentlichungstag der Anmeldung : **01.08.84 Patentblatt 84/31**

(45) Bekanntmachung des Hinweises auf die Patenterteilung : **02.03.88 Patentblatt 88/09**

(84) Benannte Vertragsstaaten : **DE FR GB**

(56) Entgegenhaltungen :
**GB-A- 1 018 105**
**US-A- 4 328 282**

(73) Patentinhaber : **BASF Aktiengesellschaft**
**Carl-Bosch-Strasse 38**
**D-6700 Ludwigshafen (DE)**

(72) Erfinder : **Kohl, Albert**
**Wiesenstrasse 3**
**D-6714 Weisenheim (DE)**
Erfinder : **Balz, Werner, Dr.**
**Kropsburgstrasse 44**
**D-6703 Limburgerhof (DE)**
Erfinder : **Melzer, Milena**
**Kirchenstrasse 116**
**D-6700 Ludwigshafen (DE)**
Erfinder : **Schneider, Norbert**
**Madenburgstrasse 57**
**D-6701 Altrip (DE)**
Erfinder : **Koester, Eberhard, Dr.**
**Max-Slevogt-Strasse 23**
**D-6710 Frankenthal (DE)**
Erfinder : **Lehner, August**
**Wachenheimer Strasse 4**
**D-6701 Roedersheim-Gronau (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 114 340 B1

**Beschreibung**

Die Erfindung betrifft ein Verfahren zur Herstellung von insbesondere für die Anwendung als Audio-, Video- oder Computerbänder geeigneten magnetischen Aufzeichnungsträgern durch Herstellen einer Dispersion von feinteiligem anisotropem magnetischem Material und üblichen Zusatzstoffen in einer Lösung eines Polymerbindemittels in einem organischen Lösungsmittel oder einer wäßrigen Dispersion eines Polymerbindemittels, schichtförmiges Auftragen der Dispersion auf ein nicht magnetisierbares Trägermaterial, anschließendes Ausrichten des anisotropen magnetischen Materials in einem Magnetfeld und Trocknen der aufgebrachten Schicht.

An Magnetschichten, die in modernen Audio- und Videoaufzeichnungs- und Wiedergabegeräten verwendet werden, werden Anforderungen in mehrfacher Hinsicht gestellt. Neben den hohen Anforderungen an die Aufzeichnungs- und Wiedergabeeigenschaften, für die Anwendung von Audiobändern, Videobändern und flexiblen Datenträgern, die stetig verbessert werden, wird vor allem bezüglich der mechanischen Eigenschaften der Aufzeichnungsträger eine ständige Anpassung und Verbesserung gefordert. Die Magnetschichten müssen sehr flexibel sein, eine hohe Elastizität aufweisen und eine hohe Reißfestigkeit besitzen. Außerdem wird, zur Vermeidung von Pegeleinbrüchen, zunehmend eine Verringerung der Reibungswerte, eine Erhöhung der Abrieb und Verschleißfestigkeit, sowie eine Verbesserung der Tropenfestigkeit gefordert. Da außerdem die magnetischen Aufzeichnungsträger zur Verbesserung der Elektroakustik zwangsweise immer glätter werden, können weiche thermoplastische Magnetschichten schon bei 20 bis 30 °C besonders aber bei höheren Temperaturen und hoher Luftfeuchtigkeit zum Verkleben neigen. Dadurch blockieren die Bänder und sind unbrauchbar. Bei etwas rauherer Magnetschicht können diese Schwierigkeiten nur auf Kosten der elektroakustischen Eigenschaften teilweise behoben werden.

Um diese Fehler zu vermeiden, ist es erforderlich, außer der Verwendung besonders geeigneter Magnetpigmente, wie Chromdioxid, cobaltdotierten Eisenoxiden und ferromagnetischen Metallteilchen, die in der Magnetschicht insgesamt enthaltenen Materialien so auszuwählen, daß die Magnetschichten neben der besonders hohen remanenten Magnetisierung in der Aufzeichnungsrichtung und bei den geforderten glatten Oberflächen die mechanischen Eigenschaften zu verbessern. Solche Magnetschichten müssen einen hohen Anteil an magnetisierbarem Material in der Magnetschicht besitzen und diese magnetisierbaren nadelförmigen Teilchen müssen sich in der Magnetschicht sehr stark entlang der vorgesehenen Aufzeichnungsrichtung orientieren lassen. Gerade die Verbesserung der genannten Eigenschaften, wie Oberflächenrauhigkeit, Remanenz und Ausrichtungsgrad bei gleichzeitig hervorragenden mechanischen Eigenschaften sind bei ein und demselben magnetischen Material im hohen Maße von den zur Herstellung der Magnetschicht verwendeten Bindemittel und Zusatzstoffen abhängig. Von den Zusatzstoffen sind in erster Linie die sogenannten Gleitmittel, Hydrophobierungsmittel und Dispergiermittel zu nennen, welche durch ihren Einsatz die elektroakustischen, magnetischen und mechanischen Eigenschaften der Bänder beeinflussen.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders enger Band/Kopf-Kontakt erforderlich ist. Daraus ergeben sich die hohen Anforderungen, die an die Verschleißfestigkeit der Bänder gestellt werden, denn eine Beschädigung der Schicht führt sofort zu Pegeleinbrüchen.

Zur Lösung dieser Probleme wurden bisher sehr viele unterschiedliche Lösungswege untersucht, so z. B.

a) Zusatz von Hydrophobierungsmitteln bei der Magnetdispersionsherstellung oder nachträgliches Aufbringen auf die Magnetschicht.

b) Verwendung von ganz speziellen Gleitmitteln. Dabei werden bevorzugt solche verwendet, die nach Möglichkeit nicht hydrophil sind oder durch Wassereinwirkung zum Kleben neigen.

c) Erhöhung der Oberflächenhärte z. B. durch Vernetzung mit Polyisocyanat oder über Strahlungshärtung. Besonders häufig beschrieben und in Anwendung sind hierbei Systeme auf Basis von Polyurethanen und/oder Abmischungen dieser Polyurethane mit härteren Polymeren, die durch Umsetzung mit Polyisocyanaten härtere Schichten ergeben, die weniger thermoplastisch und mechanisch stabiler sein sollen.

Die Vielzahl der bisher vorgeschlagenen Maßnahmen weisen of erhebliche verfahrenstechnische bzw. produktionsspezifische Mängel auf oder sie erfüllen nur ungenügend bzw. teilweise die gestellten Anforderungen. So werden z. B. Hydrophobierungsmittel und Gleitmittel häufig mit einem zusätzlichen Arbeitsgang nachträglich aufgebracht. Sind diese Mittel in der Magnetschicht enthalten, dann wirken sie oft als Weichmacher und verschlechtern die Haftung zur Trägerfolie. Diese Nachteile müssen dann durch zusätzliche Maßnahmen behoben werden. Erfolgt aber die Erhöhung der Verschleißfestigkeit und Verringerung der Tropenfestigkeit durch eine Vernetzung mit Polyisocyanat mit der die Oberflächenhärte des Bandes erhöht und die Thermostabilität verringert wird, dann kann dies nur bei bestimmten Bindemittel- und Lösungsmittelsystemen erfolgen. Außerdem ist eine solche Vernetzung mit allen Unsicherheiten einer 2-Komponenten-Polyurethanreaktion behaftet, wie z. B. steigende Viskosität mit der Lagerzeit, Wassergehalt im Pigment-Lösungsmittel und Luft bzw. Einflüsse von Basen oder Säuren der

Einsatzstoffen, Metallsalze usw.

Besonders wichtig ist, daß bedingt durch die erhöhte Trocken- und Kalandertemperatur teilweise sehr hohe Wickeldrücke im Block bzw. Rohwickel entstehen können, wodurch die Schichten mitunter verkleben. Dies ist besonders dann kritisch, wenn die Verbesserung der mechanischen Festigkeit nur über die Vernetzung mit Polyisocyanat erreicht wird und die Reaktion bei diesen Arbeitsstufen noch nicht weit genug fortgeschritten ist. Bei der Vernetzung mit Polyisocyanat muß man, um reproduzierbare Bandeigenschaften gesichert erreichen zu können, sehr hohe Anforderungen an die Qualität der Einsatzstoffe und auf exaktes Einhalten der Reaktionsparameter achten. Deshalb ist es besonders bei der Magnetbandherstellung von Vorteil, wenn man ganz oder teilweise auf die Vernetzung mit Polyisocyanaten verzichten kann, bzw. durch einen anderen Zusatz die gleichen Bandeigenschaften leicht reproduzierbar erreicht.

Bei der Auswahl der bisher bekannten Systeme bestand demnach jeweils das Ziel, durch Einzelmaßnahmen oder durch Kombination von mehreren Maßnahmen bzw. Verfahrensschritten Nachteile und Mängel wie z. B. zu hohe Thermoplastizität, zu geringe Tropenfestigkeit, zu niedrige Abriebfestigkeit, zu frühe Pegeleinbrüche durch schlechte Dauerlaufeigenschaften usw. zu beheben oder doch zumindest in dem einen oder anderen Fall günstig zu beeinflussen. Für eine Optimierung besonders bei Verwendung unterschiedlicher Bindemittelsysteme reichten die bisher vorgeschlagenen Lösungen deshalb nur ungenügend aus.

Es bestand daher die Aufgabe, durch eine einfache und sichere Maßnahme magnetische Aufzeichnungsträger bereitzustellen, bei denen durch die Verwendung geeigneter Zusätze die Verschleißfestigkeit, die Härte und die Tropenfestigkeit verbessert wird und dabei sich gleichzeitig die Thermoplastizität und die Reibwerte verringern, ohne daß die magnetischen und elektroakustischen Eigenschaften negativ beeinflußt werden und man dadurch ganz oder teilweise auf andere Verfahrensschritte, z. B. auf Zusatz von Polyisocyanat oder Strahlungshärtung verzichten könnte oder diese Verfahrensschritte sicherer macht. Durch diese Verbesserungen sollen Pegeleinbrüche vermieden und das Blocken der Bänder bei extremen Bedingungen verhindert werden.

Es wurde nun überraschenderweise gefunden, daß magnetische Aufzeichnungsträger die gestellten Anforderungen erfüllen, wenn der für die Magnetschicht verwendeten Dispersion ein Polymerisat, das aus

A) 25 bis 80 Gew.% Polyetheracrylat der Formel

$$CH_2{=}\underset{R^2}{C}-\overset{\overset{O}{\|}}{C}-(OC\underset{R^2}{H}-CH_2)_n-O-R^1 \qquad (I)$$

oder

$$CH_2{=}\underset{R^2}{C}-\overset{\overset{O}{\|}}{C}-(O-\underset{R^2}{CH}-CH_2)_n-(O-CH_2-CH_2)_m-O-R^1 \qquad (II)$$

oder eine Mischung aus (I) und (II), in der $R^1$ Wasserstoff, eine Alkylgruppe mit 1- bis 25 C-Atomen oder eine $C_1$- bis $C_{12}$-alkylsubstituierte Phenylgruppe, $R^2$ Wasserstoff oder eine $CH_3$-Gruppe ist, n im Mittel 1 bis 30 und m im Mittel 0 bis 25 bedeuten und

B) 75 bis 20 Gew.% einer ethylenisch ungesättigten $C_3$- bis $C_{10}$-Carbonsäure oder einer Mischung solcher Säuren und

C) 0 bis 40 Gew.% eines Acrylats der folgenden Formeln

$$CH_2{=}\underset{R^1}{C}-COOR^3 \qquad (III)$$

$$CH_2{=}\underset{R^1}{C}-COOR^3-OH \qquad (IV)$$

$$CH_2{=}\underset{R^1}{C}-COO-R^3-O-R^4 \qquad (V)$$

in denen $R^3$ eine Alkylgruppe mit 1 bis 20 Kohlenstoffatomen bedeutet, $R^4$ gleich $R^3$ oder

$$(\underset{R^2}{CH}-CH_2-O)_n-$$

mit n = 1 bis 20 ist und $R^1$ und $R^2$ die vorgenannte Bedeutung hat, besteht, zugesetzt wird.

Je nach Bindemittel, magnetischem Material und sonstigem Hilfsstoffsystem hat es sich als vorteilhaft herausgestellt, wenn das Polymerisat in der Salzform verwendet wird. Als besonders vorteilhaft haben sich hierbei Gegenionen aus Ammoniak oder Aminen mit einem Siedepunkt von kleiner 100 °C erwiesen. Die Herstellung dieser Copolymere erfolgt in bekannter Weise z. B. über eine radikalische oder red-ox-Polymerisation in Lösung.

Die mit dem erfindungsgemäßen Verfahren erzielbaren Verbesserungen waren nicht vorhersehbar, da die zugesetzten Polymerisate zu einem großen Teil oder ganz aus sehr hydrophilen Gruppen bestehen und außerdem mechanisch minderwertige Filme ergeben. Diese Polymere sind aufgrund ihres Aufbaues wasserlöslich oder zumindest sehr hydrophil. Allgemein ist bekannt, daß Polymere, die viele Säuregruppen oder viele Ethergruppen enthalten, gute Netz- und Dispergiermittel sind, durch ihre Verwendung jedoch die Wasserfestigkeit stark verschlechtert wird, d. h. die Tropenfestigkeit geht zurück, die Reibung nimmt zu und die Bänder neigen zum Blocken. Es war deshalb nicht zu erwarten, daß auf diese Weise sowohl mit sehr unterschiedlichen Bindemitteln als auch magnetischen Materialien und selbst in wäßrigen Systemen die Bandeigenschaften verbessert werden. Dabei ist die dispergierende Wirkung ohne Bedeutung, dies zeigt sich bei Systemen, in denen die Polymerisate die Dispergierung eher stören als fördern.

Der Zusatz der Polymerisate zur Verbesserung der Verschleiß- und Tropenfestigkeit erfolgt in einer Menge von 2 bis 20, vorzugsweise 3 bis 15 Gewichtsprozent, bezogen auf das Bindemittel. Für die Verbesserung der angestrebten Eigenschaften kann die Zugabe vor oder nach der Dispergierung erfolgen. Bevorzugt erfolgt jedoch die Zugabe vor der Dispergierung. Dadurch läßt sich die dispergierende Wirkung zusätzlich ausnutzen und eine gute und gleichmäßige Verteilung erreichen. Werden zum Aufbau der Magnetschicht weitere an sich übliche Zusatzstoffe benutzt, die neben anderen Effekten, wie der Verbesserung der Gleiteigenschaften und des Verlaufs auch die Dispergierung verbessern, so bleibt die vorteilhafte Verbesserung durch die Zugabe des Polymerisats erhalten.

Die Zusammensetzung und Herstellung der Dispersion der magnetischen Materialien im gelösten oder dispersen Polymerbindemittel entspricht den an sich üblichen Verfahren.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, eine Polyvinylformal, ein Polyurethanelastomeres, Mischungen von Polyisocyanaten und höhermolekularen Polyhydroxylverbindungen oder Vinylchloridpolymerisate mit über 60 % an Vinylchlorid-Molekülbausteinen, z. B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomerem oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth) acrylat hergestellt werden können.

Magnetdispersionen, die sich besonders für die Herstellung von starren magnetischen Aufzeichnungsplatten eignen, enthalten bevorzugt Bindemittel wie Epoxidharze, Phenoxyharze, Aminoplast-Vorkondensate, Polyesterharze, Polyurethane oder Polyurethanbildner und Mischungen solcher Bindemittel miteinander als auch mit anderen Bindemitteln, wie Polycarbonaten oder Vinylpolymeren, z. B. Vinylchlorid- oder Vinylidenchlorid-Copolymere oder hitzehärtbare Acrylat- oder Methacrylat-Copolymere.

Der Zusatz der Polymerisate gemäß dem erfindungsgemäßen Verfahren ist bei folgenden Bindemittelsysteme besonders vorteilhaft.

1. Wäßrige oder lösungsmittelhaltige Polyurethanionomere, bevorzugt anionische Polyurethanionomere z. B. gemäß den DE-OSen 29 20 334 und 30 05 009.

2. Lösungsmittelhaltige Polyurethanelastomere, wie beispielsweise in DE-AS 11 06 959 oder in der DE-AS 27 53 694 beschrieben. Die Polyurethane können dabei als alleinige Bindemittel oder vorzugsweise in Abmischungen mit anderen Polymeren (wie z. B. Polyvinylformal, Phenoxyharz PVC-Copolymerisate verwendet werden. Von der zweiten Bindemittelkomponente werden vorzugsweise in 10 bis 40 % zugesetzt. Bei diesen Bindemitteln ist es von besonderem Vorteil, daß ganz oder teilweise auf zusätzliche Dispergierhilfsmittel verzichtet werden kann. Während im allgemeinen Hilfsstoffe in möglichst geringen Mengen eingesetzt werden, da sonst die negativen Eigenschaften überwiegen, ist dies bei den Polymerisaten gemäß dem erfindungsgemäßen Verfahren nicht zu befürchten, im Gegenteil eine erhöhte Zusatzmenge verbessert die gewünschten Bandeigenschaften. Dadurch kann auf die je nach Bandtyp

und Bindemittelsystem, sonst eventuell zusätzlich erforderliche Polyisocyanatvernetzung ganz oder teilweise verzichtet werden.

3. Lösungsmittelhaltige Polyurethanprepolymere vom Typ Polyol/Polyisocyanat. Bevorzugt geeignet sind Polymere gemäß DE-A-32 27 161, DE-A 32 27 163 und DE-A 32 27 164. Hierbei ist von besonderem Vorteil, daß die mechanischen Eigenschaften der Magnetschicht nicht nur über das Polyisocyanat eingestellt wird, so daß sich systembedingte Reaktionsunterschiede oder Fehler nur teilweise auswirken können oder unterdrückt werden.

Eine gegebenenfalls, je nach Bindemittelsystem und Bandeigenschaftsprofil, erforderliche Vernetzung der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol. Die Polyisocyanatmenge kann dabei je nach Bindemittelsystem sehr unterschiedlich sein.

Als Lösungsmittel werden vorzugsweise Wasser, cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als magnetische Materialien werden bevorzugt feinteiliges stäbchenförmiges Gamma-Eisen(III) oxid mit einer durchschnittlichen Teilchengröße von 0,1 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete Materialien sind Gamma-Eisen(III) oxid mit Dotierungen von Schwermetallen, insbesondere von Kobalt sowie feinteilige Metallegierungen von Eisen, Kobalt und/oder Nickel.

Den Dispersionen können weitere Zusatzstoffe zur Verbesserung der Magnetschicht zugesetzt werden. Beispiele solcher Zusätze sind Fettsäuren Polycarbonsäuren, Mono-, Di- oder Polysulfonsäuren bzw. Phosphorsäuren deren Gemische, Ester oder Salze mit Metallen der ersten bis vierten Gruppe im Periodensystem, sowie Wachse, Lecithine, Siliconöle, Fluorcarbone, außerdem Füllstoffe wie Ruß, Graphit, Quarzmehl und/oder nicht magnetisierbares Pulver auf Silicatbasis. Im allgemeinen liegen solche Zusätze insgesamt unter 10 Gew.%, bezogen auf die Magnetschicht.

Die Herstellung der Magnetschichten erfolgt in bekannter Weise. Hierzu wird das magnetische Material mit dem verwendeten Bindemittel und ausreichend Lösungsmittel in einer Dispergiermaschine, z. B. einer Topfkugelmühle oder einer Rührwerkskugelmühle, unter Zusatz von Copolymeren und gegebenenfalls der weiteren Zusatzstoffe dispergiert. Zur Einstellung des zweckmäßigen Bindemittel-Pigment-Verhältnisses können diese der Mischung entweder in festem Zustand oder in Form von 10 bis 60 %igen Lösungen bzw. 20- bis 60 %igen Dispersionen zugegeben werden. Es hat sich als zweckmäßig erwiesen, die Dispergierung solange fortzuführen, bis eine extreme feine Verteilung des magnetischen Materials erreicht ist, was 1 bis 5 Tage erfordern kann. Durch anschließendes wiederholtes Filtrieren erhält man eine völlig homogene Magnetdispersion. Gegebenenfalls erforderliche Vernetzungsmittel werden vor der Beschichtung zur Dispersion gegeben.

Die Magnetdispersion wird nun mit Hilfe üblicher Beschichtungsmaschinen, z. B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90 °C während 2 bis 5 Minuten geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 40 bis 100 °C, vorzugsweise 60 bis 80 °C, geglättet und verdichtet werden. Die Dicke der Magnetschicht beträgt im allgemeinen 3 bis 20 µm, vorzugsweise 4 bis 15 µm.

Die erfindungsgemäß hergestellten Aufzeichnungsträger zeichnen sich durch eine verbesserte Verschleißfestigkeit und Tropenfestigkeit aus. Die Oberflächenhärte nimmt zu, die Thermoplastizität sowie die Reibungswerte ab. Pegeleinbrüche werden vermieden und das Blocken der Bänder wird verhindert.

Das erfindungsgemäße Verfahren sie, ohne dieses zu begrenzen anhand folgender Beispiele näher erläutert und seine Vorteile durch Vergleichsversuche dargestellt.

Polymerisat A

In einem Rührgefäß versehen mit Thermometer, Rückflußkühler, Stickstoffleitung und Heizmantel wurden

40 Teile Methacrylsäure,
60 Teile $CH_2{=}CH{-}CO{-}(O{-}CH_2{-}CH_2)_n{-}O{-}CH_3$ n = 8 bis 14 (das Monomere ist eine Mischung aus n = 8 bis 14 mit Schwerpunkt n = 10 bis 12.),
180 Teile Isopropanol und
120 Teile Wasser eingewogen.

Die Mischung wurde unter Rühren auf 50 °C erwärmt, dann wurden 3,2 Teile Azoisobutyronitril zugegeben und anschließend zum Sieden erhitzt. Nach 3 Stunden wurde abgekühlt, die Polymerisation war beendet. Die gelbliche, klare Polymerlösung hatte einen Feststoffgehalt von 25 % und einen K-Wert von 42,1. Die K-Werte wurden nach Fikentscher, Cellulosechemie 13, 58-65 und 71-74 (1932), 3 %ig in Dimethylformamid bestimmt, dabei bedeutet $K = k \cdot 10^3$.

Polymerisat B

Apparatur wie Beispiel A, nur druckfest.

Zulauf I

34 Teile Methacrylsäure
66 Teile $CH_2{=}CH{-}CO{-}(O{-}CH_2{-}CH_2)_n{-}O{-}CH_3$, n = 8 bis 14
250 Teile Tetrahydrofuran

Zulauf II

50 Teile Tetrahydrofuran
3,2 Teile Azoisobutyronitril

Nach Spülen mit $N_2$ wurden 70 Teile von Zulauf I im Reaktionsgefäß vorgelegt und auf 50 °C erwärmt. Bei dieser Temperatur wurden 20 % des Zulaufs II zugegeben und auf 80 °C aufgeheizt. 15 Minuten nach Erreichen von 80 °C wurden die Zuläufe I und II gleichmäßig in 75 Minuten zugefahren. Danach wurde noch weitere 90 Minuten bei 80 °C gerührt. Nach dem Abkühlen hatte man eine Polymerisatlösung mit einem Feststoffgehalt von 25,8 Gew.% und einem K-Wert von 18,4, 3 %ig in Dimethylformamid bestimmt.

Polymerisat C

Apparatur und Fahrweise wie in Beispiel B aber die Zuläufe setzen sich wie folgt zusammen :

Zulauf I

31 Teile Methacrylsäure
58 Teile $CH_2{=}CH{-}CO{-}(O{-}CH_2{-}CH_2)_n{-}O{-}CH_3$, n = 8 bis 14
6 Teile $CH_2{=}CH{-}CO{-}(O{-}CH_2{-}CH_2)_n{-}O{-}(CH_2)_3{-}CH_3$, n = 8 bis 14
5 Teile $CH_2{=}CH{-}CO{-}O{-}(CH_2)_4{-}OH$
250 Teile Tetrahydrofuran

Zulauf II

50 Teile Tetrahydrofuran
3,2 Teile Azoisobutyronitril

Die erhaltene Polymerisatlösung hat einen Feststoffgehalt von 25,6 Gew.% und einen K-Wert von 19,1, 3 %ig in Dimethylformamid bestimmt.

Beispiel 1

In einer Stahlkugelmühle von 6 000 ml Inhalt und einer Kugelfüllung von 8 000 g wurden 1 200 g eines magnetischen Eisenoxids mit einer Koerzitivfeldstärke von 26 kA/m und einer spezifischen Oberfläche von 20 $m^2/g$, 120 g des Zusatzstoffes gemäß Polymerisat A, 24 g 10 %iger Ammoniaklösung, 30 g einer 20 %igen Lösung eines Natriumpolyphosphats und 84 g eines Gleitmittels, zusammengesetzt aus Zinkstearat, eines Organopolysiloxans und Triethanolamindioleat im Verhältnis 5 : 10 : 2,5, zugesetzt und mit 760 g Wasser 20 Stunden dispergiert. In diesen Ansatz wurden anschließend 750 g einer 40 %igen Polyurethanionomerdispersion auf der Basis eines hydroxylgruppenhaltigen Polyesters, 4,4'-Diphenylmethandiisocyanat, Butandiol-1,4, Epikote-diacrylat, Mercaptoessigsäure und Triethylamin eingearbeitet.

Mit der so erhaltenen Magnetpigmentdispersion wurde nach dem Filtrieren mit einem Linealgießer eine Polyethylenterephthalatfolie von 12 µm Dicke beschichtet.

Vor der Trocknung bis 70 bis 90 °C wurde die beschichtete Folie zur Ausrichtung der magnetischen Teilchen in der Schicht durch ein homogenes Magnetfeld geführt und danach erfolgte noch eine Glättung und Verdichtung der Schicht durch Kalandrieren bei 70 °C. Die Dicke der getrockneten Schicht betrug 4,7 µm. Die so beschichtete Folie wurde in Bändern von 3,81 mm Breite geschnitten.

Die elektroakustischen Werte entsprechen der IEC I-Norm. Die Ergebnisse der mechanischen Messungen gemäß nachfolgender Tests sind in der Tabelle 1 angegeben.

Test 1

Reibungskoeffizient Schicht/Stahl, vor/nach Dauerlauf

Die Bestimmung der Reibungszahlen erfolgt nach DIN 45 522, Blatt 1. Die Reibungskoeffizienten werden am unbenutzten Band und am durch Dauerlauf benutzten Band gemessen.

Test 2

Quasistatische Reibung

Die Reibungszahl wird durch Messen einer Zugkraft bestimmt, die ein über eine feststehende Meßtrommel geführtes Magnetband durch Reibung erzeugt. Die Meßtrommel ist eine Stahltrommel mit einer Oberflächenrauhigkeit von ca. 0,15 µm und einem Durchmesser von 70 mm. Das Bandstück ist 25 cm lang und wird bei einem Bandzug von 20 cN mit einer Geschwindigkeit von 1 mm/s und einem Unschlingungswinkel von 180° über die Trommel geführt. Der Zug an der Meßdose F ist ein Maß für die Reibungszahl $\mu$ und zwar nach $\mu = 1/x \cdot 1n\ F/20$.

Test 3

Ablagerungstest

Auf einem Recorder werden jeweils 4 mit dem Magnetband gefüllte Kassetten bei 40 °C und 55 % rel. Feuchte 20 Stunden lang auf Wiedergabe betrieben. Danach werden die Ablagerungen auf dem Löschkopf, dem Tonkopf und auf der Tonwelle visuell bewertet. Die Stärke der Ablagerungen werden in einer Notenskala (von Note 1 : keine Ablagerung bis Note 6 : sehr starke Ablagerung) festgehalten und der Mittelwert gebildet.

Test 4

IND-Test

10 mit dem Magnetband gefüllten Kassetten werden 4 Wochen bei 40 °C und 93 % rel. Feuchte gelagert und anschließend bei 30 °C und 93 % rel.

Feuchte im Wiedergabebetrieb gefahren. Die Beurteilung der Ablagerungen erfolgt wie in Test 3.

Test 5

Duplicator-Test

Die Klimabedingung bei Lagerung und Betrieb von jeweils 10 Kassetten entsprechen denen des Tests 4. Danach wird jede Kassette bei 8-facher Geschwindigkeit (38 cm/s) einem Durchlauf unterzogen. Zur Auswertung werden die registrierten Bandlaufstörungen und Blockierer herangezogen und der prozentuale Anteil der ausgefallenen Kassetten als Meßwert angegeben.

Test 6

Dauerlauf-Abrieb

Mit dieser Messung werden die Abriebeigenschaften eines Bandes beurteilt. Es wird der Abrieb in Form des Gewichtsverlustes einer Bandschleife in mg gemessen. Dabei beträgt die Schleifenlänge 95 cm, die Bandgeschwindigkeit 4 m/s, der Bandzug 35 cN und die Laufzeit 1 Stunde, bei einer Umgebungstemperatur von 23 °C und einer rel. Luftfeuchte von 50 %.

Test 7

Klebetest

Die Prüfung der Klebeneigung von Magnetbändern erfolgt nach MIL-T-21029A, wobei zwischen Verkleben und Schichtabzug unterschieden wird.

Test 8

Wasserfestigkeit

Zur Bestimmung der Wasserfestigkeit wird ein 2 × 2 cm großer mit Wasser getränkter, feiner weißer

Filz zehnmal über 30 an der Magnetschicht gezogen. Der Anpreßdruck beträgt dabei 0,098 bar. Die Stärke der Ablagerungen am Filz und der Abrieb der Magnetschicht werden in einer Notenskala (von Note 1 : keine Verfärbung des Filzes bis Note 6 : die Magnetschicht löst sich ganz von der Folie) festgelegt.

Test 9

Pegelschrieb

Es wird die Anzahl der Durchläufe bestimmt, bis ein Pegeleinbruch größer 2 dB auftritt.

Vergleichsversuch A

Es wurde wie in Beispiel 1 beschrieben verfahren, jedoch wurden anstelle des Polymerisats A 120 g einer 25 %igen Lösung eines Ammoniumpolyacrylats eingesetzt und 48 Stunden dispergiert. Die Ergebnisse sind in Tabelle 1 angegeben.

Vergleichsversuch B

Es wurde wie in Beispiel 1 beschrieben verfahren, jedoch wurde anstelle des Polymerisats A 120 g einer 25 %igen wäßrigen Lösung eines Polymeren aufgebaut aus

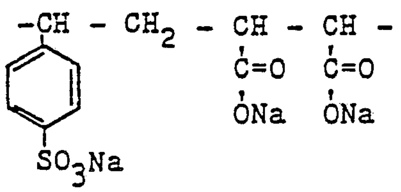

eingesetzt und 48 Stunden dispergiert. Die Ergebnisse sind in der Tabelle 1 angegeben.

Tabelle 1

| | Beispiel 1 | Vergleichsversuch A | Vergleichsversuch B |
|---|---|---|---|
| Schichtstärke [µm] | 5,1 | 5,4 | 5,5 |
| Test 1 | 0,34/0,35 | 0,40/0,59 | 0,38/>0,90 |
| Test 2 | 0,14 | 0,31 | 0,28 |
| Test 3 | 1,5 | 1,7 | 3,3 |
| Test 4 | 1,6 | 2,4 | 3,2 |
| Test 5 | 0 | 100 | 100 |
| Test 6 | 0,20 | 1,7 | 1,4 |
| Test 7 | nein | verklebt | verklebt |
| Test 8 | 2 | 4 | 4 |
| Test 9 | 500 | 60 | < 20 |

Beispiel 2

In einer Stahlkugelmühle von 6 l Inhalt und einer Kugelfüllung mit 8 000 g Stahlkugeln von 4 bis 6 mm Durchmesser wurden 900 g γ-Eisenoxid mit einer Koerzitivfeldstärke von 28 kA/m und einer spez. Oberfläche von 20 $m^2/g$ mit 72 g des Zusatzstoffes gemäß Polymerisat B, 400 g Tetrahydrofuran, 400 g Dioxan, 300 g einer 20 %igen THF/Dioxan-Lösung eines Copolymeren aus Vinylchlorid, Dimethylmaleinat und Diethylmaleinat im Verhältnis 80/10/10 und einem K-Wert von 60 in oben genanntem Lösungsmittelgemisch eingefüllt und 30 h lang dispergiert. Danach wurde 91 g der oben genannten Lösung von Copolymer Vinylchlorid/Dimethylmaleinat/Diethylmaleinat, 852 g einer 13 %igen Lösung eines Polyesterpolyurethans vom K-Wert 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol), in einem Gemisch aus gleichen Teilen Tetrahydrofuran und Dioxan, 0,9 g Siliconöl, 0,9 g Hydrochinon, 1,8 g n-Butylstearat und 9,0 g Isostearinsäure zugesetzt und weitere 2 h dispergiert.

Die erhaltene Dispersion wurde unter Druck durch einen Filter mit 5 µm Poren filtriert und auf eine 12 µm dicke Polyethylenterephthalatfolie mittels eines üblichen Linealgießers aufgetragen. Die beschichtete Folie wurde nach Durchlaufen eines Magnetfeldes zum Ausrichten der Magnetteilchen bei Temperaturen zwischen 50 und 90 °C getrocknet. Nach der Trocknung wurde die Magnetschicht durch Hindurchziehen zwischen auf 70 °C beheizten Walzen unter einem Liniendruck von 200 kp/cm verdichtet und geglättet, so daß die Dicke der Magnetschicht 4,5 µm betrug, und dann in 3,81 mm breite Bänder für Audioanwendung geschnitten. Die Messung der magnetischen Eigenschaften wurde in einem Meßfeld von 100 kA/m durchgeführt. Die elektroakustischen Werte wurden gemäß DIN 45 401, DIN 45 403 und DIN 45 512 Bl, Bl. 12 gegen das Bezugsband IEC 1 geprüft und entsprachen dieser Norm. Die mechanischen Werte sind in Tabelle 2 angegeben.

Vergleichsversuch C

Es wurde wie in Beispiel 2 beschrieben verfahren, jedoch wurde anstelle des Polymerisats B ein handelsübliches Polymeres auf Basis eines Salzes aus langkettigen Polyaminamiden und hochmolekularen Estern, 25 %ig in Toluol Tetrahydrofuran eingesetzt. Die Ela-Werte entsprechen denen des Beispiels 2, die mechanischen Werte sind in der Tabelle 2 aufgeführt.

Vergleichsversuch D

Es wurde wie in Beispiel 2 beschrieben verfahren, jedoch wurde anstelle des Polymerisats B 63 g eines Gemisches aus einem ethoxyliertem Phosphorsäureester und dem Alkylamid der Sulfobernsteinsäure, 50 %ig in Toluol eingesetzt. Die Ela-Werte entsprechen denen des Beispiels 2, die mechanischen Werte sind in der Tabelle 2 aufgeführt.

Beispiel 3

Es wurde wie in Beispiel 2 beschrieben verfahren, jedoch wurde die Zusatzmenge an Polymerisat B verdoppelt. Die mechanischen Werte sind in der Tabelle 2 aufgeführt.

Vergleichsversuch E

Dieser Versuch entspricht Vergleichsversuch C, nur wurde die doppelte Menge des doret angegebenen Zusatzes eingesetzt. Die Ergebnisse sind in Tabelle 2 angegeben.

Vergleichsversuch F

Dieser Versuch entspricht Vergleichsversuch D, nur wurde die doppelte Menge des dort angegebenen Zusatzes verwendet. Die Ergebnisse sind in Tabelle 2 angegeben.

Tabelle 2

| | Beispiele | | Vergleichsversuche | | | |
|---|---|---|---|---|---|---|
| | 2 | 3 | C | D | E | F |
| Test 9 | > 100 | > 100 | 20 | 20 | 8 | 5 |
| Test 3 | 1–2 | 1–2 | 3–4 | 4 | 4 | 4 |
| Mikrohärte | 9,5 | 9,8 | 8,5 | 8,2 | 7,8 | 6,9 |
| Test 4 | 1,7 | 1,6 | 2,8 | 3,2 | 3,2 | 3,6 |

Beispiel 4

In Stahlkugelmühlen von 6 l Rauminhalt, gefüllt mit 8 kg Stahlkugeln eines Durchmessers von 4 bis 6 mm, wurden 900 g eines $\tau$-$Fe_2O_3$ mit einer Koerzitivfeldstärke von 26,0 kA/m und einer spezifischen Oberfläche von 18,6 $m^2/g$, 72 g Polymerisat B zusammen mit 800 g eines Lösungsmittelgemisches aus gleichen Teilen Tetrahydrofuran und Dioxan, 276,9 g einer 13 %igen Lösung eines Polyesterpolyurethans von K-Wert 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 120,1 g einer 20 %igen Lösung eines Copolymers aus Vinylchlorid, Dimethylmaleinat und Diethylmaleinat im Verhältnis 80/10/10 und einem K-Wert von 60 in oben genanntem Lösungsmittelgemisch eingefüllt und 30 Stunden lang dispergiert. Dann wurden in der Nachphase 646 g Polyurethanlösung, 280 g Copolymerlösung, 0,9 g Siliconöl, 0,9 g Hydrochinon, 1,8 g n-Butylstearat und 9 g Isostearinsäure zugegeben. Nach 2 weiteren Stunden Dispergierzeit wurde die Dispersion aus der Mühle entnommen und unter Druck durch einen Filter mit 5 µm Poren filtriert. Nach der Filtration wurde die Dispersion ohne Polyisocyanatzusatz auf eine 12 µm dicke Polyethylenterephthalatfolie mittels eines

üblichen Linealgießers aufgetragen. Die beschichtete Folie wurde nach Durchlaufen eines Magnetfeldes zum Ausrichten der Magnetteilchen bei Temperaturen zwischen 50 und 90 °C getrocknet. Nach der Trocknung wurde die Magnetschicht durch Hindurchziehen zwischen auf 70 °C beheizten Walzen unter einem Liniendruck von 200 kp/cm verdichtet und geglättet, so daß die Dicke der Magnetschicht 4,5 µm betrug und dann in 3,81 mm breite Bänder für Audioanwendung geschnitten. Die Ela-Werte entsprechen der IEC I-Norm. Die aussagefähigen mechanischen Werte sind in der Tabelle 3 zusammengefaßt.

Beispiel 5

Es wurde wie in Beispiel 4 verfahren, aber in der Nachphase wurden nur 578 g Polyurethanlösung und 250 g Copolymerlösung zugegeben und nach der Filtration wurden unter kräftigem Rühren pro kg Dispersion 6,7 g einer 75 %igen Lösung eines Triisocyanats aus 3 Mol Tolyilendiisocyanat und 1 Mol Trimethylolpropan in Ethylacetat zugegeben. Die weitere Verarbeitung erfolgt wie bei Beispiel 4. Die Ergebnisse sind in der Tabelle 3 aufgeführt.

Beispiel 6

Es wurde wie in Beispiel 5 verfahren, aber in der Nachphase wurden 510 g Polyurethanlösung und 221 g Copolymerlösung zugegeben und die Vernetzung erfolgte mit 13,8 g Polyisocyanat/kg Dispersion. Die Ergebnisse sind in der Tabelle 3 aufgeführt.

Vergleichsversuch G

Es wurde wie in Beispiel 6 beschrieben verfahren, nur anstelle von Polymerisat B wurde das Polymere gemäß Vergleichsversuch C verwendet. Die Ergebnisse sind in der Tabelle 3 aufgeführt.

Tabelle 3

| | Beispiel | | | Vergleichsversuch |
|---|---|---|---|---|
| | 4 | 5 | 6 | G |
| Triisocyanatzusatz in g/kg Dispersion | - | 6,7 | 13,8 | 13,8 |
| Vernetzungsgrad bezogen auf die aktiven H in den Polyurethanen | - | 30 % | 60 % | 60 % |
| Test 9 | > 100 | > 100 | > 100 | ab 80 Durchläufe Pegeleinbrüche |
| Test 3 | 1,6 | 1,3 | 1,3 | 2,8 |
| Mikrohärte | 8,6 | 9,7 | 11,2 | 9,2 |

Beispiel 7

In eine Stahlkugelmühle mit einem Inhalt von 600 Volumenteilen, gefüllt mit 600 kg Stahlkugeln mit einem Durchmesser zwischen 4 und 6 mm, wurden 102 kg Tetrahydrofuran, 36 kg einer 50 %igen Lösung der Polyharnstoffurethane gemäß Beispiel B der DE-A 32 27 164, 100 kg eines ferromagnetischen Chromdioxids mit einer mittleren Nadellänge von 0,5 µm, 2,5 kg Zinkoleat, 0,25 kg eines handelsüblichen Siliconöls, 4 kg Polymerisat C sowie 1 kg n-Butylstearat eingefüllt und der Ansatz 36 Stunden dispergiert. Die Dispersion wurde dann unter Druck filtriert und unmittelbar vor dem Auftragen auf eine 15 µm dicke Polyethylenterephthalatfolie unter Rühren mit, bezogen auf ein Teil Dispersion, 0,035 Teilen einer 75 %igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80 °C getrocknet und durch Hindurchführen zwischen beheizten Walzen unter Druck (60 °C, Liniendruck 200 kg/cm) geglättet.

Die Messung der magnetischen Eigenschaften wurde in einem Meßfeld von 160 kA/m durchgeführt : die remanente Magnetisierung betrug 174 mT und die Ausrichtung der magnetischen Teilchen, d. h. das Verhältnis der remanenten Magnetisierung längs zu quer, 3,1. Nach dem Schneiden von 3,81 mm breiten Bändern wurden die elektroakustischen Werte gemäß DIN 45 401, 45 403 und 45 512 (Blatt 12) gegen das Bezugsband IEC II geprüft. Die Ela-Werte liegen deutlich über der IEC-Norm. Die mechanischen Werte sind in der Tabelle 4 aufgeführt.

Vergleichsversuch H

Es wurde wie in Beispiel 6 verfahren, jedoch ohne den Zusatz von Polymerisat C. Die magnetischen und die elektroakustischen Werte entsprechen denen des Beispiels 6. Die mechanischen Werte sind in Tabelle 4 angegeben.

Vergleichsversuch I

Es wurde wie in Beispiel 6 verfahren, jedoch ohne Zugabe von Zinkoleat. Die Magnetschicht war voller Agglomerate (sehr rauh, mit vielen Gießfehlern), so daß keine Auswertung möglich war.

Vergleichsversuch K

Es wurde wie im Vergleichsversuch I, jedoch mit 10 kg Polymerisat C gearbeitet. Die Magnetschicht war genau so unbrauchbar wie beim Vergleichsversuch I.

Tabelle 4

| | Beispiel | Vergleichsversuch H |
|---|---|---|
| Schichtstärke [µm] | 5,3 | 5,4 |
| Test 1 | 0,20/0,30 | 0,32/0,46 |
| Test 2 | 0,18 | 0,32 |
| Test 3 | 1,6 | 2,2 |
| Test 4 | 1,5 | 2,3 |
| Test 5 | 0 | 50 |
| Test 9 | 100 | 50 |

**Patentansprüche**

1. Verfahren zur Herstellung von magnetischen Aufzeichnungsträgern durch Dispergieren von feinteiligem anisotropen magnetischen Material und üblichen Zusatzstoffen in einer Lösung eines Polymerbindemittels in einem organischen Lösungsmittel oder einer wäßrigen Dispersion eines Polymerbindemittels, schichtförmiges Auftragen der Dispersion auf ein nichtmagnetisierbares Trägermaterial, anschließendes Ausrichten des anisotropen magnetischen Materials mittels eines Magnetfeldes und Trocknen der aufgebrachten Schicht, dadurch gekennzeichnet, daß der Dispersion ein Polymerisat, das aus

A) 25 bis 80 Gew.% eines Polyetheracrylats der Formel

$$CH_2{=}\underset{R^2}{C}-\overset{O}{\overset{\parallel}{C}}-(O\underset{R^2}{CH}-CH_2)_n-O-R^1 \qquad (I)$$

oder

$$CH_2{=}\underset{R^2}{C}-\overset{O}{\overset{\parallel}{C}}-(O-\underset{R^2}{CH}-CH_2)_n-(O-CH_2-CH_2)_m-O-R^1 \qquad (II)$$

oder einer Mischung aus (I) und (II), in der $R^1$ Wasserstoff, einer Alkylgruppe mit 1 bis 25 C-Atomen oder eine $C_1$- bis $C_{12}$-alkylsubstituierte Phenylgruppe, $R^2$ Wasserstoff oder eine $CH_3$-Gruppe, n = 1 bis 30 und m = 0 bis 25 bedeuten,

B) 75 bis 20 Gew.% einer ethylenisch ungesättigten $C_3$- bis $C_{10}$-Carbonsäure oder einer Mischung solcher Säuren und

C) 0 bis 40 Gew.% eines Acrylats der folgenden Formeln

$$CH_2=\underset{R^1}{C}-COOR^3 \qquad (III)$$

$$CH_2=\underset{R^1}{C}-COOR^3-OH \qquad (IV)$$

$$CH_2=\underset{R^1}{C}-COO-R^3-O-R^4 \qquad (V)$$

in denen $R^3$ eine Alkylgruppe mit 1 bis 20 Kohlenstoffatomen bedeutet, $R^4$ gleich $R^3$ oder

$$(\underset{R^2}{CH}-CH_2-O)_n-$$

mit n = 1 bis 20 ist und $R^1$ und $R^2$ die vorgenannte Bedeutung hat, besteht, zugesetzt wird.

2. Verfahren gemäß Anspruch 1, dadurch gekennzeichnet, daß die Komponente B) in der Salzform vorliegt.

3. Verfahren gemäß Anspruch 2, dadurch gekennzeichnet, daß als Gegenion Ammoniak und/oder ein Amin, mit einem Siedepunkt von kleiner 100 °C eingesetzt wird.

4. Verfahren gemäß einem der Ansprüche 1 bis 3, dadurch gekennzeichnet, daß als Bindemittel ein wäßriges anionisches Polyurethanionomer verwendet wird.

5. Verfahren gemäß einem der Ansprüche 1 bis 3, dadurch gekennzeichnet, daß als Bindemittel ein hydroxylgruppenhaltiger Polyurethanharnstoff mit einem Molekulargewicht zwischen 500 und 3 000 in Verbindung mit einem Polyisocyanat eingesetzt wird.

6. Verfahren gemäß einem der Ansprüche 1 bis 3, dadurch gekennzeichnet, daß das Bindemittel mindestens zu einem Teil aus einem Polyurethanelastomer besteht.

**Claims**

1. A process for the production of a magnetic recording medium by dispersing finely divided anisotropic magnetic material and conventional additives in a solution of a polymer binder in an organic solvent, or in an aqueous dispersion of a polymer binder, applying a layer of the dispersion onto a non-magnetizable base, orienting the anisotropic magnetic material by means of a magnetic field and drying the applied layer, wherein a polymer comprising

A) from 25 to 80 % by weight of a polyether acrylate of the formula

$$CH_2=\underset{R^2}{C}-\overset{O}{\overset{\|}{C}}-(O\underset{R^2}{CH}-CH_2)_n-O-R^1 \qquad (I)$$

or

$$CH_2=\underset{R^2}{C}-\overset{O}{\overset{\|}{C}}-(O-\underset{R^2}{CH}-CH_2)_n-(O-CH_2-CH_2)_m-O-R^1 \qquad (II)$$

or a mixture of (I) and (II), where $R^1$ is hydrogen, alkyl of 1 to 25 carbon atoms or $C_1$-$C_{12}$-alkyl-substituted phenyl, $R^2$ is hydrogen or $CH_3$, n is 1 to 30 and m is 0 to 25,

B) from 75 to 20 % by weight of an ethylenically unsaturated $C_3$-$C_{10}$-carboxylic acid, or a mixture of such acids, and

C) from 0 to 40 % by weight of an acrylate of the formula

$$CH_2=\underset{R^1}{C}-COOR^3 \qquad (III)$$

$$CH_2=\underset{R^1}{C}-COOR^3-OH \qquad (IV)$$

$$CH_2=\underset{R^1}{C}-COO-R^3-O-R^4 \qquad (V)$$

where $R^3$ is alkyl of 1 to 20 carbon atoms, $R^4$ is identical to $R^3$ or is

$$(\underset{R^2}{CH}-CH_2-O)_n-$$

where n is 1 to 20, and $R^1$ and $R^2$ have the above meanings, is added to the dispersion.

2. A process as claimed in claim 1, wherein component B) is present in salt form.

3. A process as claimed in claim 4, wherein the counter-ion used is ammonium or an amine having a boiling point below 100 °C, or a mixture of these.

4. A process as claimed in claim 1 or 2 or 3, wherein the binder used is an aqueous anionic polyurethane ionomer.

5. A process as claimed in claim 1 or 2 or 3, wherein the binder used is a hydroxyl-containing polyurethane-urea having a molecular weight of from 500 to 3,000, in combination with a polyisocyanate.

6. A process as claimed in claim 1 or 2 or 3, wherein the binder consists partly or completely of a polyurethane elastomer.

**Revendications**

1. Procédé de fabrication de supports d'enregistrement magnétiques par dispersion de matière magnétique anisotrope, finement divisée et d'additifs usuels dans une solution d'un liant de polymère dans un solvant organique ou dans une dispersion aqueuse d'un liant de polymère, application en couche de la dispersion sur un matériau support non magnétisable, puis alignement de la matière magnétique anisotrope au moyen d'un champ magnétique et séchage de la couche appliquée, caractérisé par le fait que l'on ajoute à la dispersion un polymérisat qui est constitué de

A) 25 à 80 % en poids d'un acrylate de polyéther de formule

$$CH_2=\underset{R^2}{C}-\overset{O}{\overset{\|}{C}}-(O\underset{R^2}{CH}-CH_2)_n-O-R^1 \qquad (I)$$

ou

$$CH_2=\underset{R^2}{C}-\overset{O}{\overset{\|}{C}}-(O-\underset{R^2}{CH}-CH_2)_n-(O-CH_2-CH_2)_m-O-R^1 \qquad (II)$$

ou d'un mélange de (I) et (II), dans lesquelles $R^1$ représente hydrogène, un groupe alkyle à 1 à 25 atomes C ou un groupe phényle substitué par alkyle en $C_1$ à $C_{12}$, $R^2$ représente hydrogène ou un groupe $CH_3$, n = 1 à 30 et m = 0 à 25,

B) 75 à 20 % en poids d'un acide carboxylique en $C_3$ à $C_{10}$ insaturé éthyléniquement ou un mélange de tels acides et

C) 0 à 40 % en poids d'un acrylate des formules suivantes

$$CH_2=\underset{R^1}{C}-COOR^3 \qquad (III)$$

$$CH_2=\underset{R^1}{C}-COOR^3-OH \qquad (IV)$$

$$CH_2=\underset{R^1}{C}-COO-R^3-O-R^4 \qquad (V)$$

dans lesquelles $R^3$ représente un groupe alkyle à 1 à 20 atomes de carbone, $R^4$ identique à $R^3$ ou est

$$(\underset{R^2}{CH}-CH_2-O)_n-$$

avec n = 1 à 20 et $R^1$ et $R^2$ ont les significations indiquées précédemment.

2. Procédé selon la revendication 1, caractérisé par le fait que le composant B) se trouve sous forme de sel.

3. Procédé selon la revendication 2, caractérisé par le fait que l'on introduit, comme ion complémentaire, de l'ammoniac et/ou une amine, d'un point d'ébullition inférieur à 100 °C.

4. Procédé selon l'une des revendications 1 à 3, caractérisé par le fait que l'on utilise comme liant un ionomère de polyuréthanne anionique aqueux.

5. Procédé selon l'une des revendications 1 à 3, caractérisé par le fait que l'on introduit, comme liant, une polyuréthanne-urée à groupes hydroxyle, d'un poids moléculaire compris entre 500 et 3 000, en combinaison avec un poly-isocyanate.

6. Procédé selon l'une des revendications 1 à 3, caractérisé par le fait que le liant est constitué, au moins en partie, par un élastomère de polyuréthanne.